# EUROPÄISCHE PATENTSCHRIFT

(11) **EP 0 932 880 B1**
(45) Veröffentlichungstag und Bekanntmachung des Hinweises auf die Patenterteilung: **28.11.2001**
(21) Anmeldenummer: 97942773.9
(22) Anmeldetag: 02.09.1997
(51) Int. Cl.: G06K 19/077

(54) **CHIPKARTE MIT EINER KONTAKTZONE SOWIE VERFAHREN ZUR HERSTELLUNG EINER SOLCHEN CHIPKARTE**
CHIP CARD WITH A CONTACT ZONE AND METHOD OF PRODUCING SUCH A CHIP CARD
CARTE A PUCE MUNIE D'UNE ZONE DE CONTACT ET PROCEDE PERMETTANT DE LA PRODUIRE

(30) Priorität: 15.10.1996 DE 19642563
(43) Veröffentlichungstag der Anmeldung: 04.08.1999
(73) Patentinhaber: Infineon Technologies AG, 81669 München (DE)
(72) Erfinder: JANCZEK, Thies, D-93055 Regensburg (DE); STAMPKA, Peter, D-92421 Schwandorf (DE)
(74) Vertreter: Zedlitz, Peter, Dipl.-Inf.
(86) Internationale Anmeldenummer: DE9701919
(87) Internationale Veröffentlichungsnummer: WO9816900

(56) Entgegenhaltungen:
- EP-A- 0 340 421
- FR-A- 2 671 417
- FR-A- 2 672 738
- JP-A- 58 054 085

## Beschreibung

Die Erfindung betrifft eine Chipkarte mit einer Kontaktzone, in deren Bereich ein elektrisch leitfähiger Lack aufgebracht ist.

Chipkarten sind seit langem bekannt und werden zum Beispiel als Zahlungsmittel insbesondere bei öffentlichen Telefonsystemen oder als Identifikationskarte verwendet.

Chipkarten verfügen häufig über einen integrierten Schaltkreis, auf den über eine auf der Oberfläche der Chipkarte vorgesehene, elektrisch leitende Kontaktzone zugegriffen werden kann. Die Kontaktzone besteht aus einzelnen Kontakten, die voneinander elektrisch isoliert sind.

Es ist bekannt, die Kontakte der Kontaktzone mit einem elektrisch leitfähigen Lack zu versehen, wobei dieser Lack auch eingefärbt sein kann. Dadurch kann die Kontaktzone selbst als Informationsträger dienen, wenn mit dem leitfähigen Lack beispielsweise das Logo des Herstellers der Chipkarte aufgedruckt wird.

Der elektrisch leitfähige Lack ist dabei als Lack ausgeführt, dem leitfähige Partikel zugesetzt sind. So ist es bekannt, Kohlenstoff für schwarzen Lack zu verwenden.

Die vorstehenden gattungsgemäßen Chipkarten haben den Nachteil, daß die Lackierung der Kontaktzone einem hohen Reibverschleiß unterliegt. Weiterhin kommt es häufig vor, daß die elektrisch leitfähigen Partikel oxidieren, so daß der Widerstand beim Zugriff auf die Kontaktzone derart ansteigt, daß ein einwandfreies Funktionieren der Chipkarte nicht mehr gewährleistet ist. Eine solche Oberfläche ist außerdem stumpf und matt und somit unansehlich.

### [Einschub von Seite 2a]

Es ist Aufgabe der Erfindung, eine gattungsgemäße Chipkarte sowie ein Verfahren zu deren Herstellung bereitzustellen, die über lange Zeit zuverlässig funktioniert.

Diese Aufgabe wird durch den Gegenstand der Ansprüche 1 bis 7 gelöst.

Gemäß der Erfindung ist wird ein intrinsisch leitfähiger Kunststoff wie zum Beispiel Polyacrylonitril zur Lackierung der Kontaktzone verwendet, wobei mit der Bezeichnung "intrinsisch leitfähig" gemeint ist, daß der verwendete Kunststoff von sich aus leitet, ohne daß ihm zusätzliche leitfähige Partikel zugesetzt werden müßten. Die derartigen Lacke zeichnen sich durch eine gute Haftung auf den im Stand der Technik bekannten Materialien der Kontaktflächen der Kontaktzone aus.

Gemäß der Erfindung ist weiterhin vorgesehen, daß dem Lack insbesondere nicht-leitende Farbpigmente zugesetzt sind. Mittels einer derartigen Pigmentierung kann nahezu jede Farbe eingestellt werden, wobei durch Verwendung geeigneter

Die EP 0 340 421 A2 offenbart einen leitfähigen Lack, der ein Salz auf der Basis eines Tetrazyanoquinodimethan-Komplexes, ein Gemisch mit hohem Molekulargewicht sowie ein Lösungsmittel enthält. Dabei enthält das Gemisch ein Tensid oder ein Silikonöl und/oder weitere Stoffe wie Acetal, Ester und Siloxane.

Die als nächstliegender Stand der Technik angesehene FR 2 671 417 A1 beschreibt ein Verfahren zur Herstellung einer Speicherkarte, gemäß dem eine dielektrische Lackschicht auf einem integriertem Schaltkreis abgelagert wird, und zwar unter Ausnahme von Kontaktbereichen. Anschließend werden Schreib-/Lesekontakte mit einem leitfähigen Lack versehen, der wiederum mit einer zweiten Schicht eines dielektrischen Lacks überzogen wird.

Pigmente auch leuchtende Farben herstellbar sind, die bei den im Stand der Technik bekannten Chipkarten nicht verwirklichbar sind. Gerade durch die grüne Eigenfarbe des gemäß der Erfindung verwendbaren Polyacrylonitrils (PANI) können grüne Farbtöne besonders einfach hergestellt werden.

Außerdem ist durch eine geeignete Auswahl der Lackkomponente die Oberflächenbeschaffenheit der erfindungsgemäßen Chipkarten ausreichend hart einstellbar, so daß vorteilhafterweise nur in geringem Maße Reibverschleiß beobachtbar ist.

Gemäß der Erfindung ist auch eine Verwendung eines elektrisch nichtleitenden Lacks mit elektrisch leitfähigen Partikeln denkbar, die mit intrinsisch leitfähigem Kunststoff überzogen sind. So können als elektrisch leitfähige Partikel beispielsweise Silberpartikel verwendet werden. Bei einer vollständigen Benetzung der leitfähigen Partikel mit dem intrinsisch leitfähigen Kunststoff entsteht so auch eine abriebfeste lackierte Kontaktzone, die eine hohe Zuverlässigkeit aufweist.

Die Erfindung umfaßt weiterhin auch die Verwendung eines intrinsisch leitfähigen Kunststoff zur Lackierung der Kontaktzone insbesondere einer Chipkarte. Gemäß der Erfindung kann nämlich ein intrinsisch leitfähiger Kunststoff, dem insbesondere nicht-leitende Farbpigmente zugesetzt sind, auch zur Lackierung anderer Kontaktflächen verwendet werden.

Schließlich umfaßt die Erfindung auch ein Verfahren zur Herstellung einer Chipkarte, das die folgenden Schritte aufweist:
- Vorsehen einer Chipkarte,
- Lackieren der Kontaktzone einer Chipkarte, wobei Zwischenräume zwischen einzelnen Kontakten der Kontaktzone mit einer Schablone abgedeckt werden,
dadurch gekennzeichnet, daß das Lackieren mit einem Lack auf der Basis eines intrinsisch leitfähigen Kunststoffs erfolgt. Dadurch bleibt bei dem erfindungsgemäßen Verfahren die Leitfähigkeit der Kontakte erhalten, wobei ein Kurzschluß zwischen den einzelnen Kontakten vermieden wird.

Mit dem erfindungsgemäßen Verfahren können dauerhafte und gegen Reibverschleiß geschützte Chipkarten hergestellt werden.

Somit lassen sich mit der Erfindung die Kontaktflächen eines Chipkartenmoduls als Werbefläche nutzen, wobei die Dekoration der Kontaktfläche unter Gewährleistung deren Funktionalität erfolgt. Gerade auf goldenen oder silbernen Kontaktflächen einer Chipkarte lassen sich so farbige Symbole, Embleme und anderes dauerhaft und eindrucksvoll ausbilden. Die Farbenvielfalt ist dabei im Gegensatz zu den im Stand der Technik bekannten Chipkarten nicht eingeschränkt, wobei insbesondere leuchtende Farben herstellbar sind.

## Patentansprüche

1. Chipkarte mit einer Kontaktzone, in deren Bereich ein elektrisch leitfähiger Lack aufgebracht ist, **dadurch gekennzeichnet, daß** der Lack auf der Basis eines intrinsisch leitfähigen Kunststoffs ausgeführt ist, dem Farbpigmente zugesetzt sind, die insbesondere nichtleitende Eigenschaften aufweisen.

2. Chipkarte nach Anspruch 1, **dadurch gekennzeichnet, daß** der Kunststoff Polyacrylonitril (PANI) aufweist.

3. Chipkarte nach Anspruch 1 oder Anspruch 2,
**dadurch gekennzeichnet, daß**
im Bereich der Kontaktzone ein elektrisch nichtleitender Lack aufgebracht ist, der leitfähige Partikel aufweist, die einen Überzug aus Lack auf der Basis eines intrinsisch leitfähigen Kunststoffs aufweisen.

4. Verwendung eines intrinsisch leitfähigen Kunststoffs, dem Farbpigmente zugesetzt sind, die insbesondere nichtleitende Eigenschaften aufweisen, zur Lackierung der Kontaktzone einer Chipkarte.

5. Verwendung eines Kunststoffs nach Anspruch 4,
**dadurch gekennzeichnet, daß**
zusätzlich ein elektrisch nichtleitender Lack, der leitfähige Partikel aufweist, die einen Überzug aus Lack auf der Basis eines intrinsisch leitfähigen Kunststoffs aufweisen, zur Lackierung der Kontaktzone insbesondere einer Chipkarte verwendet wird.

6. Verfahren zur Herstellung einer Chipkarte, das die folgenden Schritte aufweist:
- Vorsehen einer Chlpkarte,
- Lackieren der Kontaktzone einer Chipkarte, wobei die Zwischenräume zwischen einzelnen Kontakten der Kontaktzone mit einer Schablone abgedeckt werden,
**dadurch gekennzeichnet, daß** das Lackieren mit einem Lack auf der Basis eines intrinsisch leitfähigen Kunststoffs erfolgt, dem Farbpigmente zugesetzt sind, die insbesondere nichtleitende Eigenschaften aufweisen.

7. Verfahren zur Herstellung einer Chipkarte nach Anspruch 6,
**dadurch gekennzeichnet, daß**
das Lackieren mit einem elektrisch nichtleitenden Lack erfolgt, der leitfähige Partikel aufweist, die einen Überzug aus Lack auf der Basis eines intrinsisch leitfähigen Kunststoffs aufweisen.

## Claims

1. Chip card having a contact zone in the region of which an electrically conductive lacquer is applied, **characterized in that** the lacquer is made on the basis of an intrinsically conductive plastic to which pigments having, in particular, nonconductive properties are added.

2. Chip card according to Claim 1, **characterized in that** the plastic has polyacrylonitrile (PANI).

3. Chip card according to Claim 1 or Claim 2, **characterized in that** an electrically nonconductive lacquer is applied in the region of the contact zone, which lacquer has conductive particles which have a coating of lacquer on the basis of an intrinsically conductive plastic.

4. Use of an intrinsically conductive plastic to which pigments having, in particular, nonconductive properties are added, for lacquering the contact zone of a chip card.

5. Use of a plastic according to Claim 4, **characterized in that**, in addition, an electrically nonconductive lacquer having conductive particles which have a coating of lacquer on the basis of an intrinsically conductive plastic is used for lacquering the contact zone of a chip card, in particular.

6. Process for producing a chip card, which has the following steps:
- providing a chip card,
- lacquering the contact zone of a chip card, the interspaces between individual contacts of the contact zone being covered by a stencil,
**characterized in that** the lacquering is carried out using a lacquer based on an intrinsically conductive plastic to which pigments having, in particular, nonconductive properties are added.

7. Process for producing a chip card according to Claim 6, **characterized in that** the lacquering is carried out using an electrically nonconductive lacquer having conductive particles which have a coating of lacquer on the basis of an intrinsically conductive plastic.

## Revendications

1. Carte à puce ayant une zone de contact dans la région de laquelle est déposé un vernis conducteur de l'électricité, **caractérisée en ce que** le vernis est à base d'une matière plastique conductrice intrinsèquement, à laquelle sont ajoutés des pigments colorés qui ont notamment des propriétés non conductrices.

2. Carte à puce suivant la revendication 1, **caractérisée en ce que** la matière plastique comporte du polyacrylonitrile (PANI).

3. Carte à puce suivant la revendication 1 ou la revendication 2, **caractérisée en ce que** dans la région de la zone de contact est déposé un vernis non conducteur de l'électricité, qui comporte des particules conductrices qui ont un enrobage en vernis à base d'une matière plastique conductrice intrinsèquement.

4. Utilisation d'une matière plastique conductrice intrinsèquement à laquelle sont ajoutés des pigments colorés qui ont notamment des propriétés non conductrices pour le vernissage de la zone de contact d'une carte à puce.

5. Utilisation d'une matière plastique suivant la revendication 4, **caractérisée en ce qu'**il est utilisé en plus un vernis non conducteur de l'électricité qui comporte des particules conductrices qui ont un enrobage en vernis à base d'une matière plastique conductrice intrinsèquement pour le vernissage de la zone de contact, notamment d'une carte à puce.

6. Procédé de fabrication d'une carte à puce qui comporte les stades suivants :
- on prend une carte à puce,
- on vernit la zone de contact d'une carte à puce, les intervalles entre les contacts de la zone de contact étant recouverts d'un gabarit,
**caractérisé en ce que** l'on effectue le vernissage à l'aide d'un vernis à base d'une matière plastique conductrice intrinsèquement à laquelle sont ajoutés des pigments colorés qui ont notamment des propriétés non conductrices.

7. Procédé de fabrication d'une carte à puce suivant la revendication 6, **caractérisé en ce que**
l'on effectue le vernissage par un vernis non conducteur de l'électricité, qui comporte des particules conductrices, qui ont un enrobage en vernis à base d'une matière plastique conductrice intrinsèquement.
